# FASCICULE DE BREVET EUROPEEN

(11) **EP 2 330 921 B1**
(45) Date de publication et mention de la délivrance du brevet: **02.12.2015**
(21) Numéro de dépôt: 09786148.8
(22) Date de dépôt: 18.08.2009
(51) Int. Cl.: A23K 1/16, A23L 1/221, A23L 1/236

(54) **ADDITIF BI-AROMATISÉ POUR L'ALIMENTATION ANIMALE ET SON PROCÉDÉ DE PRÉPARATION**
ZUSATZMITTEL MIT ZWEI AROMEN FÜR DIE TIERERNÄHRUNG UND HERSTELLUNGSVERFAHREN
ADDITIVE FOR ANIMAL FEEDS HAVING TWO AROMA COMPOUNDS, AND PROCESS OF MANUFACTURE

(30) Priorité: 16.09.2008 FR 0805064
(43) Date de publication de la demande: 15.06.2011
(73) Titulaire: Pancosma Société Anonyme pour l'Industrie des Produits Biochimiques, 1218 Le Grand-Saconnex (CH)
(72) Inventeur: RAULET, Christelle, F-74300 Thyez (FR); MEUNIER, Jean-Philippe, F-01170 Cessy (FR); BRAVO, David, CH-1400 Yverdon-les-Bains (CH)
(74) Mandataire: Moinas & Savoye SA
(86) Numéro de dépôt international: PCT/IB2009/006571
(87) Numéro de publication internationale: WO 2010/032096

(56) Documents cités:
- EP-A1- 1 949 795
- WO-A-2007/055696
- WO-A-2008/155536
- WO-A1-2008/130234
- WO-A1-2010/020853
- JP-A- 2006 232 675
- US-A1- 2007 209 599
- MEUNIER JP ET AL: "Use of rotary fluidized-bed technology for development of sustained-release plant extract pellets: Potential application for feed additive delivery" J. ANIM. SCI., vol. 84, 2006, pages 1850-1859, XP002523051
- LIPPENS M ET AL: "Effect of the use of coated plant extracts and organic acids as alternativesfor antimicrobial growth promoters on the performance of broiler chickens" ARCHIV FUER GEFLUEGELKUNDE, VERLAG EUGEN ULMER GMBH, DE, vol. 69, no. 6, 1 décembre 2005 (2005-12-01), pages 261-266, XP008083190 ISSN: 0003-9098

## Description

L'invention concerne un additif destiné, notamment, à favoriser la prise alimentaire et la croissance chez des animaux tels que les porcelets. L'invention a trait, également, à un procédé de préparation d'un tel additif.

### Arrière-plan de l'invention

De nos jours, les éleveurs cherchent le rendement optimal de leurs élevages avec en particulier le maintien ou l'augmentation de la consommation afin de conserver la croissance. Pour cela, l'ajout d'additifs est indispensable.

De nombreux modificateurs ou exhausteurs de goût existent sur le marché afin d'augmenter la consommation et des recherches sont constamment menées en vue de trouver des additifs de plus en plus performants destinés à stimuler l'appétit de l'animal, pour que ce dernier consomme le maximum d'aliments, et donc grandisse plus vite.

Le document WO 2008/155536, déposé avant la présente demande et publié après le dépôt de la présente demande, concerne un additif pour l'alimentation animale qui ne contient pas d'édulcorant et qui n'est pas enrobé.

Le document WO 2008/130234, déposé avant la présente demande et publié après le dépôt de la présente demande, concerne une formulation pharmaceutique ingérable à libération immédiate ayant un noyau pouvant contenir du sucre ou un dérivé de sucre et un enrobage dépourvu d'arôme.

Le document « Use of rotary fluidized-bed technology for development of sustained-release plant extract pellets: Potential application for feed additive delivery », du J. ANIM. SCI., vol. 84, 2006 pages 1850-1859, décrit la préparation de granulés contenant les arômes carvacrol, eugénol et thymol et un enrobage d'éthyl-cellulose. Ces granulés ont pour but d'améliorer la croissance de porcelets en luttant contre les agents pathogènes digestifs.

### Exposé sommaire de l'invention

La présente invention a donc pour but majeur de proposer un nouvel additif alimentaire destiné à favoriser la prise alimentaire et la croissance chez des animaux.

Ce nouvel additif a été obtenu par les inventeurs, de manière surprenante, en faisant appel à la somesthésie. Ce terme désigne la sensibilité thermique, tactile, kinesthétique, prioproceptive et trigéminale (du trijumeau) chimique. Pour activer cette sensibilité, les inventeurs ont donc mis au point une nouvelle technologie associant au moins deux composés parmi les modificateurs, les exhausteurs de goût et les arômes, afin d'obtenir deux sensations successives au moment de la dissolution du produit dans la salive. Ainsi, l'effet final obtenu est d'augmenter la palatabilité des aliments consommés par l'animal.

Concrètement, l'additif alimentaire selon l'invention se présente sous forme de granulés dont chacun comprend :
- un noyau comprenant un modificateur de goût qui est un composé apportant l'une des saveurs du groupe comprenant une saveur sucrée, une saveur salée, une saveur amère, une saveur acide et une saveur umami
   et
- un enrobage comprenant au moins deux arômes.

L'additif alimentaire selon l'invention n'est pas médicamenteux. Il associe les bénéfices des modificateurs de goût, des exhausteurs de goût et des arômes.

En effet, une fois l'additif dans la gueule de l'animal, l'enrobage est dissout par la salive de l'animal, ce qui libère le noyau ce qui amplifie la première sensation et procure deux sensations successives au moment de la dissolution du produit dans la salive.

L'invention se rapporte aussi à un procédé de préparation d'un additif alimentaire selon l'invention qui comporte les étapes suivantes :
- une première étape d'obtention de noyaux sous
   forme solide comprenant un modificateur de goût qui est un composé apportant l'une des saveurs du groupe comportant une saveur sucrée, une saveur salée, une saveur amère, une saveur acide et une saveur umami ;
   et
- une deuxième étape de formation d'enrobages autour des noyaux obtenus précédemment, ces enrobages comprenant chacun au moins deux arômes.

D'autres caractéristiques et avantages de l'invention vont maintenant être décrits en détail dans l'exposé qui suit.

### Exposé détaillé de l'invention

### a) Additif selon l'invention

L'additif alimentaire selon l'invention se présente sous la forme de granulés dont chacun comprend ;
- un noyau comprenant un modificateur de goût qui est un composé apportant une saveur sucrée, salée, amère, acide ou umami, et optionellement en outre au moins un composé exhausteur de goût ou un arôme; et
- un enrobage comprenant au moins deux arômes.

Les modificateurs de goût sont des agents apportant au moins une saveur parmi les suivantes : sucré, salé, acide, amer, umami.

Comme modificateur de goût apportant une saveur sucrée, on peut citer le sucre, la saccharine ou un de ses sels, l'aspartame, l'acésulfame-K, les cyclamates, le stévioside et le glucono delta-lactone ((3R,4S,5S,6R)-3,4,5-trihydroxy-6-(hydroxyméthyl)tétrahydro-2H-pyran-2-one). Evidemment, on peut utiliser une combinaison d'au moins deux de ces composés. De préférence, on utilise de la saccharine.

Comme modificateur de goût apportant une saveur salée, on peut citer le chlorure d'ammonium, de calcium, de magnésium, de potassium, ou de sodium, et le sulfate de magnésium.

Comme modificateur de goût apportant une saveur acide, on peut citer l'acide acétique, l'acide adipique, l'acide citrique, l'acide fumarique, l'acide gluconique, la glucono delta-lactone, l'acide lactique, l'acide maléique, l'acide phosphorique, les régulateurs alimentaires de pH, l'acide tartrique.

Comme modificateur de goût apportant une saveur amère, on peut citer la caféine, l'amygdaline, la quinine, la salicyline, la théophylline, la théobromine.

Comme modificateur de goût apportant une saveur umami, on peut citer le glutamate monosodique, les acides aminés, les peptides, les protéines et les ribotides.

Un exhausteur de goût est une substance qui, sans avoir une saveur propre prononcée, ne modifie pas le goût mais augmente l'intensité de la perception olfacto-gustative.

L'exhausteur de goût peut être choisi parmi les glutamates, les guanylates, les inosinates, les ribonucléotides, les acides aminés, le néohesperidine dihydrochalcone, le kokumi, la glycyrrhizine, les glycyrrhizinates, la thaumatine et ses dérivés.

Les arômes sont des arômes alimentaires tels que définis, notamment, par la directive européenne 88/388/CEE qui classe les arômes alimentaires en 5 familles : nature, identique naturel, artificiel, de transformation et de fumée.

Il existe au moins deux ouvrages de référence énumérant les arômes : « Perfume and Flavor Chemicals », de Steffen Actander et « Fenaroli's Handbook of Flavor Ingrédients », de George A. Burdock.

Comme arôme pour le noyau ou l'enrobage, on peut citer la vanilline (3-méthoxy-4-hydroxybenzaldéhyde), l'éthyl-vanilline (3-éthoxy-4-hydroxybenzaldéhyde), le maltol, l'éthyl-maltol, l'anéthol, le salicylate de méthyle, l'eucalyptus et le menthol.

Les arômes sont généralement incorporés dans une matrice constituée d'un matériau habituellement utilisé comme matrice, tel que la maltodextrine, l'amidon natif ou modifié, la gomme arabique, la gomme guar, une lécithine, l'acide alginique ou ses dérivés, l'agar, la gomme de caroube, la gomme xanthane, le sorbitol ou ses dérivés, le mannitol, le glycérol, une pectine, un alginate, une carraggénane, la cellulose ou l'un de ses dérivés, une saponine, une graisse hydrogénée, un glycéride d'acide gras ou ses dérivés ou un mélange de deux au moins de ces composés.

Bien entendu, il est possible d'utiliser une combinaison de ces composés, suivant toutes proportions.

### Proportions

Dans l'additif alimentaire selon l'invention :
- le noyau représente de préférence de 0,5 à 60%, de préférence de 40 à 60% de la masse totale de l'additif;
- l'enrobage représente de préférence de 99,5 à 40%, de préférence de 60 à 40% de la masse totale de l'additif.

En ce qui concerne le noyau, il comprend de préférence :
- de 5 à 100 %, en particulier 10 à 100%, en poids, d'au moins un composé choisi parmi les modificateurs de goût, les exhausteurs de goût et les arômes tels que définis précédemment ; et
- le complément à 100%, d'une matrice telle que définie précédemment.

Et parmi les composés du noyau autres que la matrice éventuelle, il peut y avoir :
- de 0 à 100%, de préférence 50 à 100% en poids, d'un ou plusieurs modificateur(s) de goût ;
- de 0 à 50%, de préférence 0 à 20% en poids, d'un ou plusieurs exhausteur(s) de goût ;
- de 0 à 100%, de préférence 50 à 100% en poids, d'un ou plusieurs arôme(s) ;
- la somme des pourcentages de ces composés du noyau autres que la matrice étant égale à 100%.

En ce qui concerne l'enrobage, il comprend de préférence :
- de 5 à 100 %, en particulier de 10 à 100% en poids, d'au moins deux arômes tels que définis précédemment; et
- le complément à 100% d'une matrice telle que définie précédemment.

Un émulsifiant peut éventuellement être ajouté à la matrice du noyau ou de l'enrobage. Dans ce cas, son pourcentage est inclus dans le pourcentage de la matrice.

L'additif alimentaire selon l'invention peut être utilisé directement dans l'alimentation des animaux à une dose moyenne de 70 à 500 g/t.

### b) Procédé selon l'invention

### 1^{ère} étape

La première étape de fabrication de l'additif alimentaire selon l'invention consiste à obtenir des particules comprenant chacune, éventuellement incorporé(s) dans une matrice, le ou les composé (s) choisi parmi les modificateurs de goût, les exhausteurs de goût et les arômes.

Pour cela, on peut utiliser tout procédé permettant d'obtenir une poudre.

Par exemple, on peut préparer une solution, en général aqueuse, contenant le ou les composés, la matrice éventuelle et éventuellement un émulsifiant classique. Ensuite, la solution est pulvérisée pour former une poudre constituée du ou des composés et de la matrice éventuelle ainsi que de l'émulsifiant éventuel.

De préférence, la technique utilisée est une granulation par pulvérisation dans un lit fluidisé. L'intérêt de cette technique est qu'elle offre la possibilité de développer des microparticules relativement sphériques et homogènes permettant d'appliquer dans une deuxième étape un enrobage de bonne qualité.

### 2^{ème} étape

La deuxième étape consiste à enrober les microparticules (noyaux) obtenues à l'issue de la première étape.

L'enrobage est réalisé à partir des arômes et, si nécessaire, d'une matrice telle que décrite précédemment.

L'ensemble est généralement dissout ou mis en émulsion dans de l'eau (éventuellement à l'aide d'un émulsifiant classique ou de tout composé possédant un pouvoir émulsifiant) puis pulvérisé sur les microparticules qui ont de préférence été préalablement mises en suspension dans un lit fluidisé. Le produit final ainsi obtenu se présente sous la forme de granulés enrobés dont la répartition noyau/enrobage est homogène et dont la proportion pourra donc être constante dans l'aliment.

### Exemple

### Formulation

Une formulation a été préparée en utilisant un noyau constitué de saccharine et d'un enrobage constitué d'un mélange de deux arômes, l'anéthol et le salicylate de méthyle.

L'enrobage était constitué du mélange d'arômes incorporés dans une matrice à base d'un mélange de maltodextrine et d'amidon modifié.

### 1. Matières premières

L'anéthol (1-methoxy4-(1-propenyl)-benzene) (Ernesto,Ventos, Barcelone, Espagne) a été utilisé en tant que molécule aromatique à saveur sucrée et comme principe actif (non médicamenteux) en combinaison avec le salicylate de méthyle (ortho-hydroxybenzoate de méthyle) (Ernesto,Ventos, Barcelone, Espagne) utilisé en tant que molécule aromatique apportant une note fraîche et principe actif non médicamenteux.

La maltodextrine Granadex 20 (Avebe veendam Hollande) et l'amidon modifié (Hicap 100, National Starch, Allemagne) sont utilisés comme excipients (matrice) pour la granulation en lit d'air fluidisé.

Enfin, la saccharine (Atlantic Chimical, Chine) est utilisée comme édulcorant pour le noyau de la particule.

### 2. Préparation des microparticules

### 2.1 Préparation de la formulation F1

Dans une première étape, la saccharine est mise en solution puis, elle est granulée par pulvérisation dans un lit d'air fluidisé de type Procell 5 (Glatt GmbH, Weimar, Allemagne) suivant les conditions décrites dans le tableau N°2. La taille des particules à obtenir est fixée entre 25 et 500 µm.

**Tableau N°1: Composition de la solution de saccharine**

| **Composé** | **Quantité (g)** | **Solide (%)** |
|---|---|---|
| Saccharine | 400 | 100,00 |
| Eau | 600 | |
| Total | 1000 | 100,00 |

**Tableau N°2: Paramètres de granulation de la formulation F1 dans un lit d'air fluidisé de type Procell 5 (Glatt GmbH, Weimar, Allemagne)**

| Paramètres | Pulvérisation par le bas |
|---|---|
| Débit d'air m³/h | 100-140 |
| Température du produit (°C) | 27-36 |
| Buse (mm) | 1 |
| Pression d'air de pulvérisation (bar) | 2,5 |
| Débit de pulvérisation (g/min) | 15 |

### 2.2. Préparation de la formulation F2

L'enrobage de la composition F1 est réalisé en lit d'air fluidisé de type Procell 5 en utilisant comme enrobage une émulsion (tableau N°3) à base de molécules aromatiques.

Dans une 1^{er} étape, on dissout la maltodextrine et l'amidon modifié dans de l'eau. La solution d'anéthol et de salicylate de méthyle est ensuite ajoutée lentement sous agitation vigoureuse (à l'aide d'un ultraturax ou d'un homogénéisateur sous pression). L'émulsion ainsi obtenue est ensuite utilisée comme solution d'enrobage dans un lit d'air fluidisé dont les conditions de travail sont décrites dans le tableau N°4. L'enrobage est réalisé jusqu'à 65,6% (p/p) du produit final, c'est-à-dire jusqu'à l'obtention de la formulation F2 (tableau N°5).

**Tableau N°3: Composition de la formulation d'enrobage**

| Composé | Solution (%) | Solide (%) |
|---|---|---|
| Maltodextrine | 13,74 | 34,34 |
| Hicap 100 | 13,74 | 34,34 |
| Propylène glycol | 2,00 | 5,00 |
| Anéthol | 10,00 | 25,00 |
| Salicylate de méthyle | 0,53 | 1,32 |
| Eau | 60,00 | 0,0 |
| Total | | 100,00 |

**Tableau N°4 : Paramètres d'enrobage (65,6%, p/p) de la formulation F2 dans un lit d'air fluidisé de type Procell 5 (Glatt GmbH, Weimar, Allemagne)**

| Paramètres | Pulvérisation par le bas |
|---|---|
| Débit d'air m³/h | 120-300 |
| Température produit (°C) | 50-65 |
| Buse (mm) | 1,2 |
| Température de la buse (°C) | 70 |
| Pression d'air de pulvérisation (bar) | 2,5 |
| Température produit (°C) | 48-50 |
| Débit de pulvérisation (g/min) | 56-86 |

**Tableau N°5: Composition de la formulation F2**

| Composé | Pourcentage pondéral |
|---|---|
| Formulation F1 | 34,4 |
| Maltodextrine | 22,5 |
| Hicap 100 | 22,5 |
| Propylène Glycol | 3,3 |
| Anéthol | 16,4 |
| Salycilate de méthyle | 0,9 |
| Total | 100 |

### c) Utilisations

Des essais sur animaux ont montré que cet additif alimentaire bi-aromatisé selon l'invention augmente la consommation et la croissance chez le porcelet.

## Revendications

1. Additif pour l'alimentation animale se présentant sous forme de granulés, chaque granulé comprenant un noyau et un enrobage comprenant au moins deux arômes,
**caractérisé en ce que** ledit noyau comprend un modificateur de goût qui est un composé apportant l'une des saveurs du groupe comportant une saveur sucrée, une saveur salée, une saveur amère, une saveur acide et une saveur umami.

2. Additif pour l'alimentation animale selon la revendication 1, dans lequel ledit noyau comporte en outre au moins l'un des composés du groupe comportant les exhausteurs de goût et les arômes.

3. Additif pour l'alimentation animale selon la revendication 2, dans lequel le composé apportant une saveur sucrée est choisi dans le groupe constitué par le sucre, la saccharine et ses sels, l'aspartame, l'acésulfame-K, les cyclamates, le stévioside et le glucono delta-lactone ((3R, 4S, 5S, 6R) -3, 4, 5-trihydroxy-6-(hydroxyméthyl) tétrahydro-2H-pyran-2-one).

4. Additif pour l'alimentation animale selon la revendication 3, dans lequel le composé apportant une saveur sucrée est la saccharine.

5. Additif pour l'alimentation animale selon la revendication 1, dans lequel le composé apportant une saveur salée est choisi dans le groupe constitué par le chlorure d'ammonium, de calcium, de magnésium, de potassium, ou de sodium et le sulfate de magnésium.

6. Additif pour l'alimentation animale selon la revendication 1, dans lequel le composé apportant une saveur amère est choisi dans le groupe constitué par la caféine, l'amygdaline, la quinine, la salicyline, la théophylline, la théobromine et les dérivés de ces composés.

7. Additif pour l'alimentation animale selon la revendication 1, dans lequel le composé apportant une saveur acide est choisi dans le groupe constitué par l'acide acétique, l'acide adipique, l'acide citrique, l'acide fumarique, l'acide gluconique, la glucono delta-lactone, l'acide lactique, l'acide maléique, l'acide phosphorique, les régulateurs alimentaires de pH, l'acide tartrique.

8. Additif pour l'alimentation animale selon la revendication 1, dans lequel le composé apportant une saveur umami est choisi dans le groupe constitué par le glutamate monosodique, les acides aminés, les peptides, les protéines et les ribotides.

9. Additif pour l'alimentation animale selon la revendication 8, dans lequel le composé apportant une saveur umami est le glutamate monosodique.

10. Additif pour l'alimentation animale selon l'une des revendications 2 à 9, dans lequel l'exhausteur de goût du noyau est choisi dans le groupe constitué par les glutamates, les guanylates, les inosinates, les ribo- nucléotides, les acides aminés, le néohesperidine dihydrochalcone, le kokumi, la glycyrrhizine, les glycyrrhizinates, la thaumatine et ses dérivés.

11. Additif pour l'alimentation animale selon l'une des revendications 2 à 10, dans lequel le ou les arômes éventuel (s) du noyau et les arômes de l'enrobage sont choisis parmi la vanilline (3-méthoxy-4- hydroxybenzaldéhyde), l'éthyl-vanilline (3-éthoxy-4-hydroxybenzaldéhyde), le maltol, l'éthyl-maltol, l'anéthol, le salicylate de méthyle, l'eucalyptus et le menthol et les mélanges de deux au moins de ces composés.

12. Additif pour l'alimentation animale selon l'une des revendications 1 à 11, dans lequel le ou les modificateur (s) de goût et/ou exhausteur (s) de goût et/ou arôme (s) du noyau sont incorporés dans une matrice.

13. Additif pour l'alimentation animale selon l'une des revendications 1 à 12, dans lequel les arômes de l'enrobage sont incorporés dans une matrice.

14. Additif pour l'alimentation animale selon la revendication 12 ou 13, dans lequel la matrice comprend au moins un matériau choisi dans le groupe constitué par la maltodextrine, l'amidon natif ou modifié, la gomme arabique, la gomme guar, une lécithine, l'acide alginique ou ses dérivés, l'agar, la gomme de caroube, la gomme xanthane, le sorbitol ou ses dérivés, le mannitol, le glycérol, une pectine, un alginate, une carraggénane, la cellulose ou l'un de ses dérivés, une saponine, une graisse hydrogénée, un glycéride d'acide gras ou ses dérivés ou un mélange de deux au moins de ces composés.

15. Additif pour l'alimentation animale selon l'une des revendications 1 à 14, dans lequel :
- le noyau constitue de 0,5% à 60% de la masse totale de l'additif ;
- l'enrobage constitue de 99,5 à 40% de la masse totale de l'additif.

16. Additif pour l'alimentation animale selon l'une des revendications 1 à 15, dans lequel le noyau comprend :
- de 5 à 100 % d'au moins un composé choisi parmi les modificateurs de goût, les exhausteurs de goût et les arômes tels que définis précédemment ; et
- le complément à 100% d'une matrice.

17. Additif pour l'alimentation animale selon l'une des revendications 1 à 16, dans lequel, dans le noyau, parmi les composés autres que la matrice éventuelle se trouvent :
- de 0 à 100%, de préférence 50 à 100% en poids d'un ou plusieurs modificateur (s) de goût ;
- de 0 à 50%, de préférence 0 à 20% en poids d'un ou plusieurs exhausteur (s) de goût ;
- de 0 à 100%, de préférence 50 à 100% en poids d'un ou plusieurs arôme (s) ;
- la somme de ces composés du noyau autres que la matrice étant égale à 100%.

18. Additif pour l'alimentation animale selon l'une des revendications 1 à 17, dans lequel l'enrobage comprend :
- de 5 à 100 % d'au moins deux arômes tels que définis précédemment ; et
- le complément à 100% d'une matrice.

19. Aliment pour animal d'élevage, comprenant 70 à 500 g/t d'additif selon l'une des revendications 1 à 18.

20. Utilisation d'un additif pour l'alimentation animale selon l'une quelconque des revendications 1 à 18, ou d'un aliment selon la revendication 19, pour favoriser la prise alimentaire et la performance chez un animal.

21. Utilisation selon la revendication 20, dans lequel l'animal est un porcelet.

22. Procédé de préparation d'un additif pour l'alimentation animale selon l'une des revendications 1 à 18, comprenant : une première étape de formation de noyaux comprenant un modificateur de goût qui est un composé apportant l'une des saveurs du groupe comportant une saveur sucrée, une saveur salée, une saveur amère, une saveur acide et une saveur umami, et une deuxième étape de formation d' enrobages autour des noyaux obtenus précédemment, ces enrobages comprenant chacun au moins deux arômes.

23. Procédé selon la revendication 22, dans lequel, dans la première étape, on forme des noyaux comportant en outre au moins un composé choisi parmi les exhausteurs de goût et les arômes.

24. Procédé selon la revendication 22, dans lequel la première étape comprend une granulation par pulvérisation dans un lit fluidisé.

25. Procédé selon l'une des revendications 22 à 24, dans lequel, dans la première étape, le ou les modificateur (s) de goût et/ou exhausteur (s) de goût et/ou arôme (s) est/sont mis sous la forme d'une solution qui est ensuite pulvérisée pour former les noyaux.

26. Procédé selon l'une des revendications 22 à 25, dans lequel la deuxième étape comprend la préparation d'une solution d'un matériau destiné à former une matrice, puis l'ajout des arômes dans cette solution afin de former une émulsion qui est ensuite pulvérisée sur les noyaux.

27. Procédé selon la revendication 26, dans lequel, dans la deuxième étape, les arômes sont d'abord mis sous la forme d'une solution, puis cette solution est ajoutée à la solution du matériau devant former la matrice.

## Patentansprüche

1. Zusatzmittel für die Tierernährung in Granulatform, wobei jedes Granulat einen Kern und eine aus mindestens zwei Aromen bestehende Beschichtung umfasst,
dadurch charakterisiert, dass
der besagte Kern einen Geschmacksmodulator enthält, welcher einen der Geschmäcker aus der Gruppe liefert, die aus einem süßen, einem salzigen, einem bitteren, einem sauren und einem Umami-Geschmack besteht.

2. Zusatzmittel für die Tierernährung nach Anspruch 1, in dem der besagte Kern ferner mindestens eine Verbindung der aus den Geschmacksverstärkern und den Aromen bestehenden Gruppe enthält.

3. Zusatzmittel für die Tierernährung nach Anspruch 2, in dem die den süßen Geschmack liefernde Verbindung aus der Gruppe ausgewählt ist, die aus Zucker, Saccharin und seinen Salzen, Aspartam, Acesulfam-K, Cyclamaten, Steviosid und Glucono-δ-lacton ((3R, 4S, 5S, 6R) -3, 4, 5-trihydroxy-6-(hydroxymethyl)tetrahydro-2H-pyran2-on).

4. Zusatzmittel für die Tierernährung nach Anspruch 3, in dem die den süßen Geschmack liefernde Verbindung Saccharin ist.

5. Zusatzmittel für die Tierernährung nach Anspruch 1, in dem die den salzigen Geschmack liefernde Verbindung aus der Gruppe ausgewählt ist, die aus Ammoniumchlorid, Calciumchlorid, Magnesiumchlorid, Kaliumchlorid oder Natriumchlorid und aus Magnesiumsulfat besteht.

6. Zusatzmittel für die Tierernährung nach Anspruch 1, in dem die den bitteren Geschmack liefernde Verbindung aus der Gruppe ausgewählt ist, die aus Kaffein, Amygdalin, Chinin, Salicin, Theophyllin, Theobromin und Derivaten davon besteht.

7. Zusatzmittel für die Tierernährung nach Anspruch 1, in dem die den sauren Geschmack liefernde Verbindung aus der Gruppe ausgewählt ist, die aus Essigsäure, Adipinsäure, Zitronensäure, Fumarsäure, Gluconsäure, Glucono-δ-lacton, Milchsäure, Maleinsäure, Phosphorsäure, Säurenregulatoren, Weinsäure besteht.

8. Zusatzmittel für die Tierernährung nach Anspruch 1, in dem die den Umami-Geschmack liefernde Verbindung aus der Gruppe ausgewählt ist, die aus Mononatriumglutamat, Aminosäuren, Peptiden, Proteinen und Ribotiden besteht.

9. Zusatzmittel für die Tierernährung nach Anspruch 8, in dem die den Umami-Geschmack liefernde Verbindung Mononatriumglutamat ist.

10. Zusatzmittel für die Tierernährung nach einem der Ansprüche 2 bis 9, in dem der Geschmacksverstärker des Kerns aus der Gruppe ausgewählt ist, die aus Glutamaten, Guanylaten, Inosinaten, Ribonukleotiden, Aminosäuren, Neohesperidin- Dihydrochalkon, Kokumi, Glycyrrhizin, Glycyrrhizinaten, Thaumatin und seinen Derivaten besteht.

11. Zusatzmittel für die Tierernährung nach einem der Ansprüche 2 bis 10, in dem der oder die etwaigen Aromen des Kerns und die Aromen der Beschichtung unter Vanillin (3-methoxy-4-hydroxybenzaldehyd), Ethyl-Vanillin (3-ethoxy-4-hydroxybenzaldehyd), Maltol, Ethylmaltol, Anethol, Methysalicylat, Eukalyptus, Menthol und Mischungen aus mindestens zwei dieser Verbindungen ausgewählt sind.

12. Zusatzmittel für die Tierernährung nach einem der Ansprüche 1 bis 11, in dem der oder die Geschmacksmodulatoren und/oder der oder die Geschmacksverstärker und/oder der oder die Aromen des Kernes in eine Matrix eingebaut sind.

13. Zusatzmittel für die Tierernährung nach einem der Ansprüche 1 bis 12, in der die Aromen der Hülle in einer Matrix eingebaut sind.

14. Zusatzmittel für die Tierernährung nach Anspruch 12 oder 13, in dem die Matrix mindestens einen Werkstoff umfasst, welcher aus der Gruppe ausgewählt wird, die aus Maltodextrin, nativer oder modifizierter Stärke, Gummiarabikum, Guargummi, Lecithin, Alginsäure oder Derivaten davon, Agar, Johannisbrotgummi, Xanthangummi, Sorbitol oder seinen Derivaten, Mannitol, Glycerol, Pektin, Alginat, Carrageen, Zellulose oder einem ihrer Derivate, Saponin, hydriertem Fett, Glycerid von Fettsäuren oder Derivaten davon, oder einer Mischung aus mindestens zwei dieser Verbindungen besteht.

15. Zusatzmittel für die Tierernährung nach einem der Ansprüche 1 bis 14, in dem:
- der Kern 0,5% bis 60% der Gesamtmasse des Zusatzmittels bildet;
- die Beschichtung 40 bis 99,5% der Gesamtmasse des Zusatzmittels bildet.

16. Zusatzmittel für die Tierernährung nach einem der Ansprüche 1 bis 15, in dem der Kern enthält:
- 5 bis 100% von mindestens einer unter den oben definierten Geschmacksmodulatoren, Geschmacksverstärkern und Aromen ausgewählten Verbindung; und
- die Ergänzung zu einer Matrix zu 100%.

17. Zusatzmittel für die Tierernährung nach einem der Ansprüche 1 bis 16, in dem unter den von der etwaigen Matrix verschiedenen Verbindungen sich in dem Kern befinden:
- 0 bis 100 Gewichtsprozent, vorzugsweise 50 bis 100 Gewichtsprozent eines oder mehrerer Geschmacksmodulatoren;
- 0 bis 50 Gewichtsprozent, vorzugsweise 0 bis 20 Gewichtsprozent eines oder mehrerer Geschmacksverstärker
- 0 bis 100 Gewichtsprozent, vorzugsweise 50 bis 100 Gewichtsprozent eines oder mehrerer Aromen;
- wobei die Summe dieser von der Matrix verschiedenen Verbindungen des Kernes 100 % beträgt.

18. Zusatzmittel für die Tierernährung nach einem der Ansprüche 1 bis 17, in dem die Beschichtung umfasst:
- 5 bis 100% von mindestens 2 der oben definierten Aromen; und
- die Ergänzung zu einer Matrix zu 100%.

19. Futter für Zuchttiere, bestehend aus 70 bis 500 g/t Zusatzmittel nach einem der Ansprüche 1 bis 18.

20. Verwendung eines Zusatzmittels für die Tierernährung nach einem der Ansprüche 1 bis 18 oder eines Futters nach dem Anspruch 19, um die Nahrungsaufnahme und die Leistung bei dem Tier zu fördern.

21. Verwendung nach Anspruch 20, in der das Tier ein Ferkel ist.

22. Herstellungsverfahren eines Zusatzmittels für die Tierernährung nach einem der Ansprüche 1 bis 18, das umfasst: einen ersten Schritt der Herstellung der Kerne, die einen Geschmacksmodulator enthalten, welcher einen der Geschmäcke aus der Gruppe liefert, die aus einem süßen, einem salzigen, einem bitteren, einem sauren und einem Umami-Geschmack besteht; und einen zweiten Schritt der Herstellung der Beschichtungen um die zuvor erhaltenen Kerne herum, wobei diese Beschichtungen mindestens zwei Aromen enthalten.

23. Verfahren nach Anspruch 22, in dem man im ersten Schritt Kerne herstellt, die ferner mindestens eine unter den Geschmacksverstärkern und den Aromen ausgewählte Verbindung enthalten.

24. Verfahren nach Anspruch 22, in dem der erste Schritt eine Wirbelschicht-Sprühgranulation umfasst.

25. Verfahren nach einem der Ansprüche 22 bis 24, in dem im ersten Schritt der oder die Geschmacksmodulatoren und/oder der oder die Geschmacksverstärker, und/oder der oder die Aromen in die Form einer Lösung gebracht werden, die dann versprüht wird, um die Kerne zu bilden.

26. Verfahren nach einem der Ansprüche 22 bis 25, in dem der zweite Schritt die Herstellung einer Lösung eines zur Bildung der Matrix vorgesehenen Werkstoffes und anschließend die Zugabe der Aromen zu dieser Lösung umfasst, um eine Emulsion zu bilden, die anschließend auf die Kerne besprüht wird.

27. Verfahren nach Anspruch 26, in dem in dem zweiten Schritt die Aromen zuerst in Lösung gebracht werden, die dann zu der Lösung des Matrix bildenden Werkstoffs hinzugefügt wird.

## Claims

1. An additive for animal feed that is in the form of granules, each granule comprising a core and a coating comprising at least two flavors, **characterized in that** said core comprises a flavour modifier that is a compound supplying one of the tastes of the group comprising a sweet taste, a salt taste, a bitter taste, a sour taste and an umami taste.

2. The additive for animal feed as claimed in claim 1, **characterized in that** the core also comprises one compound selected from flavor enhancers and flavors.

3. The additive for animal feed as claimed in claim 2, **characterized in that** the compound supplying a sweet taste is selected from the group comprising sugar, saccharin and salts thereof, aspartame, acesulfame-K, cyclamates, stevioside and glucono-δ-lactone ((3R,4S,5S,6R)-3,4,5-trihydroxy-6-(hydroxymethyl)tetrahydro-2H-pyran-2-one).

4. The additive for animal feed as claimed in claim 3, **characterized in that** the compound supplying a sweet taste is saccharin.

5. The additive for animal feed as claimed in claim 1, **characterized in that** the compound supplying a salt taste is selected from the group comprising ammonium chloride, calcium chloride, magnesium chloride, potassium chloride, or sodium chloride and magnesium sulfate.

6. The additive for animal feed as claimed in claim 1, **characterized in that** the compound supplying a bitter taste is selected from the group comprising caffeine, amygdalin, quinine, salicilin, theophylline, theobromine and derivatives of these compounds.

7. The additive for animal feed as claimed in claim 1, **characterized in that** the compound supplying a sour taste is selected from the group comprising acetic acid, adipic acid, citric acid, fumaric acid, gluconic acid, glucono-δ-lactone, lactic acid, maleic acid, phosphoric acid, food-grade pH regulators, tartaric acid.

8. The additive for animal feed as claimed in claim 1, **characterized in that** the compound supplying an umami taste is selected from the group comprising monosodium glutamate, amino acids, peptides, proteins and ribotides.

9. The additive for animal feed as claimed in claim 8, **characterized in that** the compound supplying an umami taste is monosodium glutamate.

10. The additive for animal feed as claimed in one of claims 2 to 9, **characterized in that** the flavor enhancer of the core is selected from the group comprising glutamates, guanylates, inosinates, ribonucleotides, amino acids, neohesperidin dihydrochalcone, kokumi, glycyrrhizin, glycyrrhizinates, thaumatin and its derivatives.

11. The additive for animal feed as claimed in one of claims 2 to 10, **characterized in that** the optional flavor ingredient or ingredients of the core and the flavor ingredients of the coating are selected from vanillin (3-methoxy-4-hydroxybenzaldehyde), ethyl vanillin (3-ethoxy-4-hydroxybenzaldehyde), maltol, ethyl maltol, anethole, methyl salicylate, eucalyptus and menthol and mixtures of at least two of these compounds.

12. The additive for animal feed as claimed in one of claims 1 to 11, **characterized in that** the flavor modifier(s) and/or flavor enhancer(s) and/or flavor ingredient(s) of the core are incorporated in a matrix.

13. The additive for animal feed as claimed in one of claims 1 to 12, **characterized in that** the flavor ingredients of the coating are incorporated in a matrix.

14. The additive for animal feed as claimed in claim 12 or claim 13, **characterized in that** the matrix comprises at least one material selected from the group comprising maltodextrin, native or modified starch, gum arabic, guar gum, a lecithin, alginic acid or derivatives thereof, agar, carob bean gum, xanthan gum, sorbitol or derivatives thereof, mannitol, glycerol, a pectin, an alginate, a carrageenan, cellulose or a derivative thereof, a saponin, a hydrogenated fat, a glyceride of fatty acid or derivatives thereof or a mixture of at least two of these compounds.

15. The additive for animal feed as claimed in one of claims 1 to 14, **characterized in that**:
- the core constitutes from 0.5 to 60% of the total weight of the additive;
- the coating constitutes from 99.5 to 40% of the total weight of the additive.

16. The additive for animal feed as claimed in one of claims 1 to 15, **characterized in that** the core comprises:
- from 5 to 100% of at least one compound selected from flavor modifiers, flavor enhancers and flavor ingredients as defined previously; and
- the complement to 100% of a matrix.

17. The additive for animal feed as claimed in one of claims 1 to 16, **characterized in that**, in the core, the compounds other than the optional matrix comprise:
- from 0 to 100%, preferably 50 to 100 wt.% of one or more flavor modifier(s);
- from 0 to 50%, preferably 0 to 20 wt.% of one or more flavor enhancer(s);
- from 0 to 100%, preferably 50 to 100 wt.% of one or more flavor ingredient(s);
- the sum of these compounds of the core other than the matrix being equal to 100%.

18. The additive for animal feed as claimed in one of claims 1 to 17, **characterized in that** the coating comprises:
- from 5 to 100% of at least two flavor ingredients as defined previously; and
- the complement to 100% of a matrix.

19. A feed for farm animals, comprising 70 to 500 g/t of additive as claimed in one of claims 1 to 18.

20. The use of an additive for animal feed according to any one of claims 1 to 18, or of a feed as claimed in claim 19, for promoting an animal's food intake and performance.

21. The use as claimed in claim 20, **characterized in that** the animal is a piglet.

22. A method of preparation of an additive for animal feed as claimed in one of claims 1 to 18, comprising:
- a first stage of formation of cores comprising a flavour modifier that is a compound supplying one of the tastes of the group comprising a sweet taste, a salt taste, a bitter taste, a sour taste and an umami taste; and
- a second stage of formation of coatings around the cores obtained previously, said coatings each comprising at least two flavors.

23. The method as claimed in claim 22, **characterized in that**, in the first stage, cores comprising also one compound selected from flavor enhancers and flavors are formed.

24. The method as claimed in claim 22, **characterized in that** the first stage comprises granulation by fluidized-bed spraying.

25. The method as claimed in on of claims 22 to 24, **characterized in that**, in the first stage, the flavor modifier(s) and/or flavor enhancer(s) and/or flavor ingredient(s) is/are made into a solution, which is then sprayed to form cores.

26. The method as claimed in one of claims 22 to 25, **characterized in that** the second stage comprises preparation of a solution of a material intended to form a matrix, then addition of the flavor ingredients to this solution in order to form an emulsion, which is then sprayed onto the cores.

27. The method as claimed in claim 26, **characterized in that**, in the second stage, the flavor ingredients are first made into a solution, then this solution is added to the solution of the material that is to form the matrix.
